# EUROPÄISCHE PATENTSCHRIFT

(11) **EP 3 536 650 B1**
(45) Veröffentlichungstag und Bekanntmachung des Hinweises auf die Patenterteilung: **11.11.2020**
(21) Anmeldenummer: 18160918.1
(22) Anmeldetag: 09.03.2018
(51) Int. Cl.: B66C 1/02

(54) **BEDIENVORRICHTUNG FÜR EINEN SCHLAUCHHEBER UND SCHLAUCHHEBER**
CONTROL DEVICE FOR A HOSE LIFTER AND HOSE LIFTER
DISPOSITIF DE FONCTIONNEMENT POUR UN SIPHON À TUYAU ET SIPHON À TUYAU

(43) Veröffentlichungstag der Anmeldung: 11.09.2019
(73) Patentinhaber: J. Schmalz GmbH, 72293 Glatten (DE)
(72) Erfinder: Burt, Hans, 72160 Horb a.N. (DE); Gauß, Jan, 72250 Freudenstadt (DE)
(74) Vertreter: DREISS Patentanwälte PartG mbB

(56) Entgegenhaltungen:
- WO-A1-81/02289
- WO-A1-2007/094720
- DE-A1- 3 934 922
- DE-C5-102008 028 205
- DE-U- 1 778 580
- DE-U1-202016 104 731

## Beschreibung

Die Erfindung betrifft eine Bedienvorrichtung sowie einen Schlauchheber, der mit einer solchen Bedienvorrichtung ausgestattet ist.

Schlauchheber sind Unterdruck-Handhabungsvorrichtungen mit welchen Lasten von Hilfe Unterdruck gegriffen, angehoben und gegebenenfalls verlagert werden können. Die Hubkraft wird mit einem Hubschlauch ausgeübt, d.h. einem reversibel entlang seiner Längsausdehnung verformbaren, in der Regel faltenbalgartig ausgebildeten Schlauch, der durch Beaufschlagung seines Schlauchinnenraums mit Unterdruck verkürzbar und durch Abbau des in ihm herrschenden Unterdrucks wieder verlängerbar ist. An einem Ende des Hubschlauches ist in der Regel eine Sauggreifvorrichtung angeschlossen. Der für die Sauggreifvorrichtung erforderliche Unterdruck wird in der Regel durch den im Hubschlauch herrschenden Unterdruck bereitgestellt.

Um den Hubschlauch zu bedienen, insbesondere um den im Hubschlauch herrschenden Unterdruck einzustellen und bei Bedarf durch kontrolliertes Zuströmen von Umgebungsluft abzubauen, sind verschiedenartige Bedienvorrichtungen bekannt. Mittels der Bedienvorrichtungen wird in der Regel auch der Unterdruck-Zustand in der Sauggreifvorrichtung des Schlauchhebers gesteuert. Solche Bedienvorrichtungen umfassen in der Regel eine oder mehrere Ventileinrichtungen.

Die WO 81/02289 A1 zeigt einen Schlauchheber mit einer zweistufigen Ventileinrichtung. Durch Betätigen eines Steuerhebels wird zunächst eine erste Ventilöffnung nach und nach geöffnet, so dass kontrolliert Umgebungsluft in den Hubschlauch einströmt und sich der Hubschlauch verlängern kann. Wird der Steuerhebel weiter betätigt, so wird eine zusätzliche Belüftungsöffnung geöffnet, so dass eine weitgehende Belüftung von Hubschlauch und Sauggreifvorrichtung erfolgt.

Die DE 10 2008 028 205 C5 zeigt eine Bedienvorrichtung für Schlauchheber mit einem Handgriff, welcher einen manuell betätigbaren Abzug aufweist. Bei Betätigung des Abzuges wird zunächst ein Steuerventil geöffnet, durch welches ein Zustrom von Umgebungsluft in den Hubschlauch gesteuert wird. Bei weiterer Betätigung über einen Druckpunkt hinaus wird eine zweite Belüftungseinrichtung geöffnet, welche einen erheblichen Zustrom von Umgebungsluft zulässt. Durch diese zusätzliche Belüftung des Sauggreifers wird ein Ablösen des Werkstückes gewährleistet.

Derartige Bedienvorrichtungen ermöglichen eine intuitive Bedienung, wobei zunächst der Hubschlauch belüftet wird und dadurch ein Verlängern des Hubschlauches unter Wirkung der Gewichtskraft der Last eingeleitet wird. Erst dann, bei weiterer Betätigung des entsprechenden Steuerelements erfolgt eine vollständige Belüftung, die ein Ablösen des angesaugten Gegenstandes ermöglicht. Allerdings ist der Hubschlauch in belüftetem Zustand nicht mehr kontrolliert verkürzbar und verlängerbar, sondern verbleibt zunächst in seinem verlängerten Zustand.

In der WO 2007 094 720 A1 ist ein Schlauchheber mit einer Bedienvorrichtung beschrieben, welche die Merkmale des Oberbegriffs des Anspruchs 1 aufweist. Mittels eines Bedienschiebers am Griff wird ein Steuerventil zum Einlass von Umgebungsluft in den Hubschlauch gesteuert. Außerdem ist ein separater Hebel vorgesehen, mit dem ein Belüftungsventil geöffnet werden kann. Das Steuerventil ist unabhängig von den übrigen Ventilen betätigbar. Durch Betätigung des Hebels kann es zu einer weitgehenden Belüftung des Hubschlauches und der Sauggreifvorrichtung kommen.

Bei den bekannten Vorrichtungen kann eine zusätzliche Belüftung durch das Belüftungsventil zu unerwünschten Längenänderungen des Hubschlauches führen. Dies ist insbesondere problematisch, wenn ein angesaugter Gegenstand losgelassen werden soll und der Hubschlauch gleichzeitig seine Länge verändert. Dadurch kann z.B. das abgelegte Werkstück verkippen oder verrutschen.

Außerdem besteht ein Risiko, dass durch schnelles Belüften die Sauggreifvorrichtung und die gehaltene Last zu schnell abgesenkt werden. Es kann auch nicht ausgeschlossen werden, dass im Extremfall durch vollständiges Betätigen des Steuerelements die Last ungewollt losgelassen wird. Insbesondere, wenn eine Last in großer Höhe gehalten wurde, kann es zu Beschädigung der Last und/oder zu Verletzungen von umstehenden Personen kommen.

Der vorliegenden Erfindung liegt die Aufgabe zugrunde, die Bediensicherheit und Zuverlässigkeit für einen Schlauchheber zu verbessern.

Diese Aufgabe wird durch eine Bedienvorrichtung gemäß Anspruch 1 gelöst. Die Bedienvorrichtung ist zur Bedienung eines Schlauchhebers eingerichtet. Ein solcher Schlauchheber weist einen Hubschlauch auf, welcher einen Schlauchinnenraum einschließt. Durch Beaufschlagung des Schlauchinnenraums mit Unterdruck ist der Hubschlauch reversibel verkürzbar, und entsprechend durch Zufuhr von Luft (z.B. Umgebungsluft) in den Schlauchinnenraum wieder verlängerbar. An einem Ende des Hubschlauches ist eine Sauggreifvorrichtung angeschlossen, welche durch den Schlauchinnenraum mit Unterdruck versorgt wird. Mit dem anderen Ende ist der Hubschlauch insbesondere an einem geeigneten Träger oder Gerüst angeordnet.

Die Bedienvorrichtung hat einen Sauganschluss zur Strömungsverbindung mit der angeschlossenen Sauggreifvorrichtung, einen Hubschlauchanschluss zur Strömungsverbindung mit dem Schlauchinnenraum des angeschlossenen Hubschlauches. Außerdem kann die Bedienvorrichtung wenigstens einen Umgebungszugang zum Einströmen von Luft aus der Umgebung aufweisen. Dieser Zugang kann z.B. durch Öffnungen in einem Gehäuse der Bedienvorrichtung gebildet sein. Die Bedienvorrichtung umfasst außerdem eine Ventileinrichtung zur Steuerung der verschiedenen Strömungsverbindungen, d.h. insbesondere der Strömungsverbindung zwischen Hubschlauch und Sauggreifvorrichtung sowie der Strömungsverbindung zwischen Hubschlauch und Umgebung und zwischen Sauggreifvorrichtung und Umgebung.

Die Ventileinrichtung umfasst insbesondere drei funktionale Einheiten zur Bereitstellung von Ventilfunktionen. Zum einen ist ein Sperrorgan vorgesehen, das verschiedene Stellungen einnehmen kann und je nach seiner Stellung einen Strömungsweg zwischen dem Hubschlauchanschluss und dem Sauganschluss absperrt oder freigibt. Außerdem ist ein Belüftungsventil vorgesehen, welches in eine Haltestellung und in eine Belüftungsstellung verstellbar ist, wobei in Belüftungsstellung der Strömungsweg zwischen der Umgebung und der Sauggreifvorrichtung freigegeben ist und in der Haltestellung dieser Strömungsweg weitgehend verschlossen ist (insbesondere dicht verschlossen ist). Außerdem ist ein Steuerventil vorgesehen, das zwischen einer Schließstellung und einer Öffnungsstellung einstellbar ist, wobei in Öffnungsstellung ein Strömungsweg von dem Schlauchinnenraum zur Umgebung freigegeben ist und in Schließstellung dieser Strömungsweg im Wesentlichen verschlossen ist. Die Ventileinrichtung ist dabei derart ausgebildet, dass das Steuerventil auch unabhängig von der Stellung des Sperrorgans einstellbar ist.

Die Ventileinrichtung ist außerdem derart ausgebildet, dass das Sperrorgan mit dem Belüftungsventil zwangsgekoppelt ist, und zwar insofern, dass dann, wenn das Belüftungsventil in die Belüftungsstellung verstellt ist, automatisch sichergestellt ist, dass das Sperrorgan den Strömungsweg zwischen Schlauchinnenraum und Sauggreifvorrichtung absperrt.

Mit dieser Bedienvorrichtung kann die Länge des Hubschlauches somit über das Steuerventil eingestellt werden. Der von dem Steuerventil beeinflusste Strömungsweg weist insofern einen definierten Strömungswiderstand auf, der das Steuerverhalten des Hubschlauches beeinflusst. Insbesondere ist dieser Strömungswiderstand derart, dass auch in Öffnungsstellung der Hubschlauch nicht schlagartig belüftet wird und aufgrund der Gewichtskraft nach unten sackt, sondern der Hubschlauch sich aufgrund des Zusammenspiels der Unterdruckversorgung des Hubschlauches und des Einströmens von Luft durch den Strömungswiderstand des Steuerventils sowie der wirkenden Gewichtskraft langsam und kontrolliert verlängert.

Durch Öffnen des Belüftungsventils wird die angeschlossene Sauggreifvorrichtung auf jeden Fall direkt belüftet und ein angesaugter Gegenstand wird somit zuverlässig abgelöst. Insbesondere ist es nicht erforderlich, dass die Sauggreifvorrichtung gegen eine Restsaugkraft von der Oberfläche des Gegenstandes abgekippt oder abgehebelt werden muss. Dies ist bei bekannten Bedienvorrichtungen teilweise der Fall und ist insbesondere bei Handhabung von Gegenständen auf hohen Stapeln problematisch, da eine Bedienperson dann mit ungünstiger Körperhaltung arbeiten muss.

Da das Steuerventil unabhängig von der Stellung des Sperrorgans einstellbar ist, bleibt die Länge des Hubschlauches kontrolliert mittels des Steuerventils einstellbar, auch wenn der Sauger durch das Belüftungsventil belüftet wird. Da mit der Belüftung stets auch das Sperrorgan schließt, kann eine ungewollte Längenänderung des Hubschlauches vermieden werden. Anders als bei einigen bekannten Lösungen gelangt durch die Belüftung der Sauggreifvorrichtung nicht zusätzlich Luft in den Hubschlauch. Dadurch wird die Bediensicherheit und Zuverlässigkeit des Schlauchhebers erhöht.

Um ein unbeabsichtigtes Belüften zu vermeiden, kann ein Sicherheitsmechanismus vorgesehen sein, welcher derart mit dem Steuerventil und dem Belüftungsventil zusammenwirkt, dass das Belüftungsventil nur dann in die Belüftungsstellung verstellbar ist, wenn das Steuerventil bereits in die Öffnungsstellung eingestellt ist. Hierdurch wird das Risiko minimiert, dass ein angesaugter Gegenstand aus großer Höhe fallengelassen wird.

Um die Kopplung von Belüftungsventil und Sperrorgan zu realisieren, kann ein gemeinsames, manuell betätigbares Bedienelement für das Sperrorgan und das Belüftungsventil vorgesehen sein. Dieses Bedienelement wirkt gemeinsam auf Belüftungsventil und Sperrorgan insofern, dass bei Betätigung des Bedienelements das Sperrorgan den Strömungsweg zwischen Schlauchinnenraum und Sauggreifvorrichtung absperrt und gleichzeitig das Belüftungsventil in die Belüftungsstellung verstellt wird. Ist das Bedienelement nicht betätigt, so nimmt es eine Ruhelage ein, wobei in der Ruhelage das Belüftungsventil in seiner Haltestellung vorliegt und das Sperrorgan den Strömungsweg zwischen Schlauchinnenraum und Sauggreifvorrichtung freigibt. Insbesondere ist das Bedienelement mit einem Federmittel in Richtung seiner Ruhelage vorgespannt, d.h. nur gegen eine Rückstellkraft aus der Ruhelage heraus betätigbar.

Zur weiteren Ausgestaltung ist das Bedienelement gegen eine Betätigung mechanisch blockiert, solange das Steuerventil nicht in seine Öffnungsstellung eingestellt ist. Beispielsweise ist ein mechanischer Anschlag für das Bedienelement vorgesehen, welcher erst wegbewegt wird, wenn das Steuerventil in seine Öffnungsstellung eingestellt wird.

Der genannte Sicherheitsmechanismus kann z.B. über eine Kopplung der jeweiligen Betätigungselemente (z.B. Schieber, Abzug, Riegel) realisiert werden. Beispielsweise ist zur Betätigung des Steuerventils ein manuell zwischen einer Neutrallage und einer Endlage kontinuierlich betätigbares Steuerelement vorgesehen (z.B. Schieber, Abzug). Bei Betätigung des Steuerelements ausgehend von der Neutrallage in Richtung seiner Endlage wird das Steuerventil aus der Schließstellung in Richtung Öffnungsstellung verstellt. Zur Realisierung des Sicherheitsmechanismus kann dann zusätzlich ein verschwenkbarer bzw. verlagerbarer Sperrriegel vorgesehen sein, der eine Sperrstellung einnehmen kann, in welcher er das Bedienelement für das Belüftungsventil mechanisch gegen eine Betätigung blockiert. Zusätzlich kann ein bewegliches Kopplungsglied vorgesehen sein, welches derart mit dem Steuerelement für das Steuerventil und dem Sperrriegel für das Belüftungsventil zusammenwirkt, dass der Sperrriegel dann aus seiner Sperrstellung verschwenkt bzw. verlagert wird, wenn das Steuerelement in seine Endlage eingestellt wird.

Beispielsweise kann das Steuerelement einen Zapfen oder Vorsprung aufweisen, welcher in einem Langloch des Kopplungsgliedes geführt ist und erst bei Vorliegen der Endlage an einem Ende des Langloches anstößt und dadurch das Kopplungsglied bewegt wird, um den Sperrriegel aus der Sperrstellung zu verschwenken bzw. zu verlagern.

Das gemeinsame Bedienelement für Sperrorgan und Belüftungsventil einerseits und das Steuerelement für das Steuerventil andererseits sind vorzugsweise separat (insbesondere räumlich beabstandet voneinander) an der Bedienvorrichtung angeordnet. Beide Elemente sind aber vorzugsweise derart an der Bedienvorrichtung angeordnet, dass beide Elemente von einer Bedienperson bedient werden können, insbesondere beide Elemente mit derselben Hand.

Denkbar ist auch, dass das Belüftungsventil und das Sperrorgan innerhalb der Ventileinrichtung miteinander mechanisch zwangsgekoppelt sind. Dadurch kann sichergestellt werden, dass durch eine Einstellung des Belüftungsventils in die Belüftungsstellung automatisch auch das Sperrorgan in diejenige Stellung verstellt wird, in welcher der Strömungsweg zwischen Hubschlauch und Sauggreifvorrichtung abgesperrt wird.

Eine zuverlässige Ausgestaltung ergibt sich dadurch, dass das Belüftungsventil nicht kontinuierlich verstellbar ausgebildet ist, sondern von einem diskret in Haltestellung und Belüftungsstellung schaltbaren Ventil bereitgestellt ist.

Ebenso kann das Sperrorgan als nicht kontinuierlich verstellbares Sperrorgan ausgebildet sein, welches nur diskret in seine zwei Stellungen schaltbar ist.

Die diskreten Ausgestaltungen für Belüftungsventil und/oder Sperrorgan haben den Vorteil, dass die Präzision der Steuerung über das Steuerventil nicht beeinträchtigt wird, beispielsweise dadurch, dass durch nicht eindeutig definierte Stellungen von Belüftungsventil und/oder Sperrorgan zusätzlich Luft in den Hubschlauch einströmt. Insofern erlaubt diese Bedienvorrichtung eine Steuerung mit hoher Präzision.

Bei einer besonders bevorzugten Ausgestaltung weist die Ventileinrichtung ein 3/2-Wegeventil auf, welches sowohl das Sperrorgan, als auch das Belüftungsventil bereitstellt. Das 3/2-Wegeventil weist definitionsgemäß drei Anschlüsse auf, wobei ein Anschluss mit dem Sauganschluss, ein weiterer Anschluss mit der Umgebung und ein dritter Anschluss mit dem Steuerventil und/oder dem Hubschlauchanschluss strömungsverbunden ist. Bei Vorliegen der Haltestellung ist der Sauganschluss über das 3/2-Wegeventil mit dem Hubschlauchanschluss und/oder dem Steuerventil verbunden. Bei Vorliegen der Belüftungsstellung ist der Sauganschluss über das 3/2-Wegeventil mit der Umgebung verbunden und gleichzeitig die Verbindung bzw. der Strömungsweg von dem Hubschlauchanschluss zu dem Sauganschluss abgesperrt.

Das Steuerventil ist, wie eingangs erwähnt, weitgehend unabhängig von dem Sperrorgan einstellbar. Insbesondere ist das Steuerventil auch dann in die Öffnungsstellung verstellbar, wenn das Sperrorgan den Strömungsweg zwischen Schlauchinnenraum und Sauggreifvorrichtung absperrt. Vorzugsweise ist dann auch vorgesehen, dass das Steuerventil auch wieder zurück in Richtung Schließstellung einstellbar ist. Insofern bleibt der Hubschlauch auch bei Belüftung der Sauggreifvorrichtung vollständig kontrollierbar.

Nach einem vorteilhaften Aspekt der Erfindung sind das Steuerventil, das Sperrorgan und das Belüftungsventil zwischen dem Hubschlauchanschluss und dem Sauganschluss funktional in Serie geschaltet, d.h. die genannten Einheiten wirken entlang des Strömungsweges vom Hubschlauchanschluss zum Sauganschluss nacheinander. Insbesondere ist ausgehend von dem Hubschlauchanschluss zunächst das Belüftungsventil angeordnet und erlaubt einen kontrollierbaren Lufteinlass zum Hubschlauchanschluss. Danach, dem Strömungsweg folgend, ist das Sperrelement angeordnet, um kontrolliert den Strömungsweg zwischen Hubschlauchanschluss und Sauganschluss abzusperren bzw. freizugeben. Schließlich folgt das Belüftungsventil, um kontrolliert Luft zur Belüftung des Sauganschlusses zuzuführen. Der Hubschlauch mit seinem Schlauchinnenraum und die angeschlossene Sauggreifvorrichtung bilden insgesamt betrachtet ein globales Unterdrucksystem mit zwei funktionalen Unterdruckbereichen: Dem Hubschlauchsystem, über dessen Druckzustand die Verkürzung bzw. die Verlängerung des Hubschlauches gesteuert wird, und das Greifsystem mit der Sauggreifvorrichtung (die Sauggreifvorrichtung bildet mit einer anzusaugenden Oberfläche einen Saugraum aus, so dass durch Unterdruck in dem Saugraum die Oberfläche angesaugt werden kann). Durch die Kopplung von Sperrorgan und Belüftungsventil können die zwei funktionalen Bereiche entweder voneinander getrennt werden (Belüftungsstellung des Belüftungsventils und gleichzeitig Absperrung des Strömungsweges mittels des Sperrorgans), oder zu einem gemeinsamen Unterdrucksystem miteinander verbunden sein (Haltestellung). Bei Vorliegen der Belüftungsstellung ist der Sauggreifer funktional vom Hubschlauch getrennt und beeinflusst den Unterdruck im Hubschlauch nicht.

Vorteilhafterweise weist die Bedienvorrichtung einen Handgriff auf, der insbesondere ergonomisch ausgestaltet ist und von einer Bedienperson gegriffen werden kann (vorzugsweise einhändig). An dem Handgriff ist vorzugsweise das gemeinsames Bedienelement für das Sperrorgan und das Belüftungsventil angeordnet. Auch das betätigbare Steuerelement zur Einstellung des Steuerventils ist vorzugsweise an dem Handgriff angeordnet.

Die eingangs gestellte Aufgabe wird auch durch einen Schlauchheber der genannten Art gelöst, wobei dieser Schlauchheber mit der vorstehend beschriebenen Bedienvorrichtung ausgestattet ist. Dabei ist die Bedienvorrichtung über ihren Sauganschluss mit der Sauggreifvorrichtung verbunden und über ihren Hubschlauchanschluss mit dem Hubschlauch des Schlauchhebers verbunden.

Die Erfindung wird im Folgenden anhand der Figuren näher erläutert.

Es zeigen:
Figur 1: Skizzierte Darstellung eines Schlauchhebers mit einer Bedienvorrichtung;
Figur 2: Detailansicht der Bedienvorrichtung aus Figur 1;
Figur 3: Die Bedienvorrichtung in Schnittdarstellung mit geschlossenem Steuerventil und geschlossenem Belüftungsventil;
Figur 4: Die Bedienvorrichtung in Schnittdarstellung mit geöffnetem Steuerventil;
Figur 5: Die Bedienvorrichtung in Schnittdarstellung mit geöffnetem Steuerventil und geöffnetem Belüftungsventil sowie geschlossenem Sperrorgan;
Figur 6: Funktionsskizze für die Konfiguration gemäß Figur 3;
Figur 7: Funktionsskizze für die Konfiguration gemäß Figur 4; und
Figur 8: Funktionsskizze für die Konfiguration gemäß Figur 5.

In der folgenden Beschreibung sowie in den Figuren sind für identische oder einander entsprechende Merkmale jeweils dieselben Bezugszeichen verwendet.

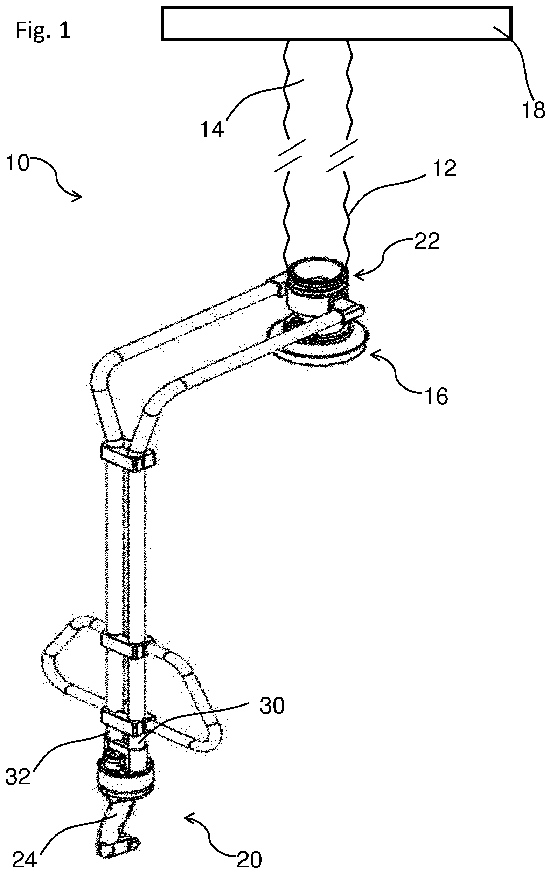

Die Figur 1 zeigt einen skizzierten Schlauchheber 10 mit einem reversibel verlägerbaren und verkürzbaren Hubschlauch 12. Der Hubschlauch 12 umschließt einen Schlauchinnenraum 14, der im Betriebszustand mittels einer nicht näher dargestellten Unterdruckversorgung evakuiert wird. Je nach Druckniveau im Schlauchinnenraum 14 wird der Hubschlauch reversibel verkürzt oder verlängert sich, z.B. unter der Wirkung der Gewichtskraft.

Das untere Ende des Hubschlauches 12 ist mit einer Sauggreifvorrichtung 16 verbunden, die durch den Hubschlauch 12 mit Unterdruck versorgt wird. Mit seinem der Sauggreifvorrichtung 16 entgegengesetzten oberen Ende ist der Hubschlauch 12 mit einem Träger oder Gerüst 18 verbunden. Durch Verkürzen des Hubschlauches 12 kann somit die Sauggreifvorrichtung 14 und ein mit der Sauggreifvorrichtung 14 angesaugter Gegenstand (nicht dargestellt) angehoben werden.

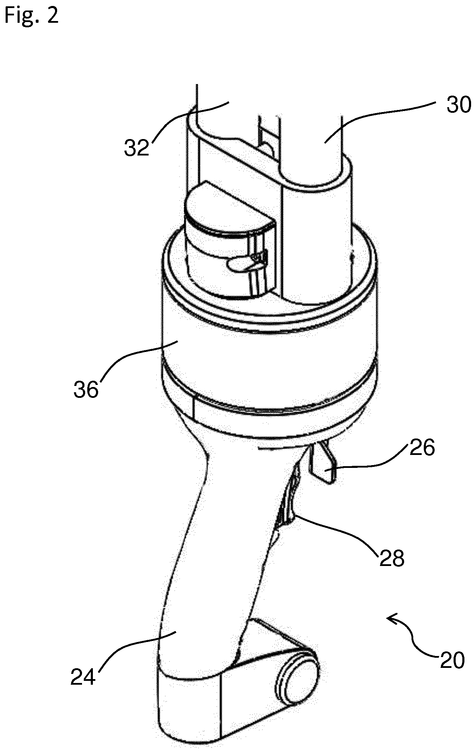

Um den Hubschlauch 12 sowie die Sauggreifvorrichtung 14 zu bedienen und zu steuern, ist eine Bedienvorrichtung 20 vorgesehen (Detailansicht vgl. Figur 2).

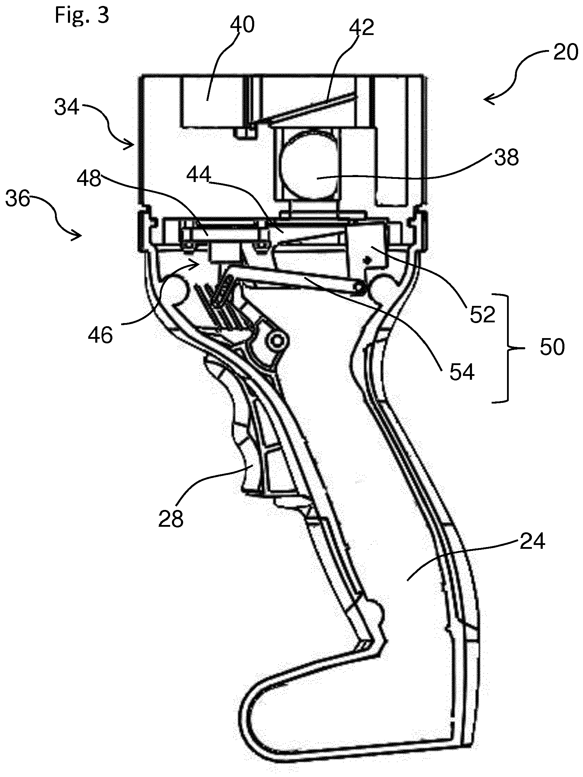

Im dargestellten Beispiel weist die Bedienvorrichtung 20 einen Anschlussabschnitt 22 auf, welcher mechanisch mit dem Hubschlauch 12 und der Sauggreifvorrichtung 14 verbunden ist. Die Verbindung ist dabei insbesondere derart ausgebildet, dass mittels der Bedienvorrichtung 20 auch Strömungsverbindungen zwischen dem Schlauchinnenraum 14 und der Sauggreifvorrichtungen 16, zwischen Schlauchinnenraum 14 und der Umgebung sowie zwischen Sauggreifvorrichtung 16 und der Umgebung gesteuert werden können. Hierzu weist die Bedienvorrichtung 20 eine Ventilvorrichtung auf, die weiter unten anhand der Figuren 3 - 8 näher beschrieben ist.

Wie in den Figuren 1 und 2 erkennbar, weist die Bedienvorrichtung 20 einen Handgriff 24 sowie zwei separate Bedieneinrichtungen auf: ein Bedienelement 26 und ein Steuerelement 28, deren Funktion im Folgenden noch näher erläutert wird. Der Handgriff 20 ist dabei insbesondere derart ausgeformt, dass eine Bedienperson ihn mit einer Hand greifen kann und dabei das Bedienelement 26 und das Steuerelement 28 mit einer Hand betätigen kann (z.B. mit Zeigefinger und/oder Mittelfinger).

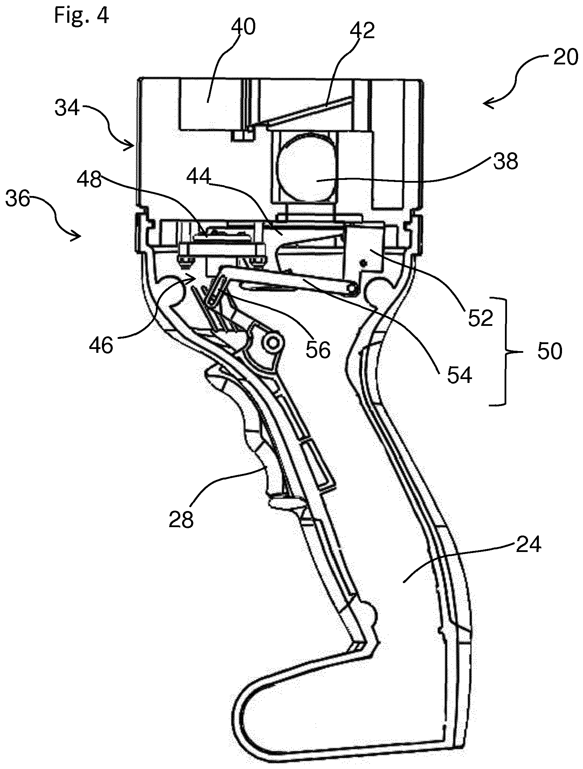

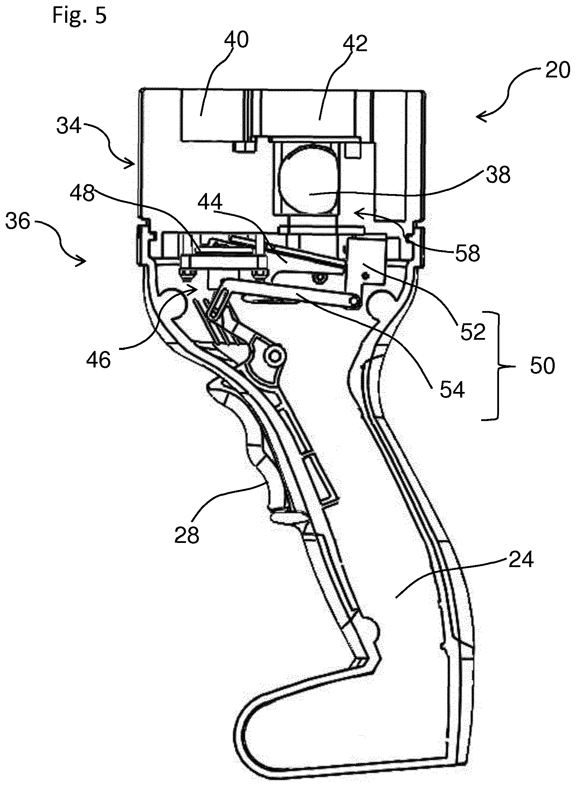

Das Steuerelement 28 z.B. in der Art eines Pistolenabzugs ausgebildet, der ausgehend von einer Neutrallage (vgl. Figur 2 und Figur 3) in Richtung einer Endlage (vgl. Figuren 4 und 5) kontinuierlich eindrückbar ist. Insbesondere ist das Steuerelement 28 in seiner Neutrallage vorgespannt und kann nur gegen eine Rückstellkraft eingedrückt werden.

Das Bedienelement 26 ist z.B. tastenartig ausgebildet und kann ausgehend von einer Ruhelage eingedrückt werden Insbesondere ist das Bedienelement 26 in seiner Ruhelage vorgespannt und kann nur gegen einer Rückstellkraft ausgehend von der Ruhelage betätigt werden.

Die Bedienvorrichtung 20 weist einen Sauganschluss 30 auf, der im dargestellten Beispiel mittels einer rohrartigen Verbindungsleitung mit dem Anschlussabschnitt 22 verbunden ist und zur Strömungsverbindung mit der angeschlossenen Sauggreifvorrichtung 16 dient. Außerdem weist die Bedienvorrichtung 20 einen Hubschlauchanschluss 32 auf, der - im dargestellten Beispiel wiederum über den Anschlussabschnitt 22 - zur Strömungsverbindung mit dem angeschlossenen Hubschlauch 12 (genauer: dem Schlauchinnenraum 14) dient. Die Bedienvorrichtung 20 weist außerdem einen nicht näher dargestellten Umgebungszugang auf, welcher beispielsweise durch entsprechende Durchbrüche oder Öffnungen im Bereich des Handgriffs 24 gebildet sein können.

Bei der dargestellten Bedienvorrichtung 20 ist der Anschlussabschnitt 22 räumlich weit beabstandet von dem Handgriff 24. Insbesondere verlaufen die rohrartigen Verbindungsleitungen zwischen dem Anschlussabschnitt 22 und dem Handgriff derart, dass im Betrieb des Schlauchhebers 10 die Sauggreifvorrichtung 16 vertikal versetzt (oberhalb) des Handgriffs positioniert ist. Diese Ausgestaltung erlaubt es, mit dem Schlauchheber Gegenstände von hohen Stapeln aufzunehmen und abzulegen.

Die Bedienvorrichtung 20 weist außerdem eine Ventileinrichtung 36 auf, die anhand der Figuren 5 bis 8 näher erläutert wird. Im dargestellten Beispiel sind wesentliche Bauelemente der Ventileinrichtung 36 in einem Ventilgehäuseabschnitt 34 der Bedienvorrichtung 20 angeordnet (vgl. Figur 2).

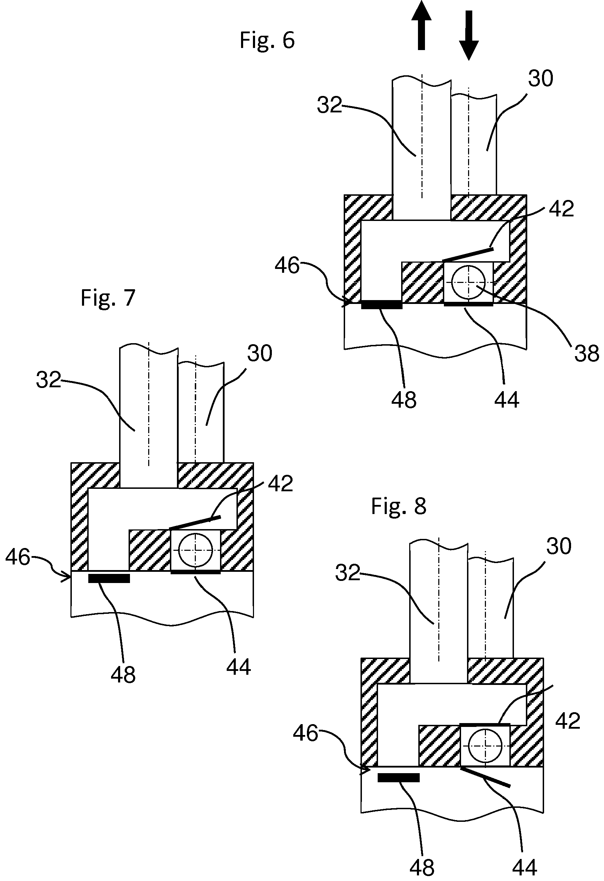

Die Figuren 3 bis 5 zeigen die Bedienvorrichtung 20 im Bereich des Handgriffs 24 in einer LängsschnittDarstellung. Hierbei ist die Ventileinrichtung 36 im Detail erkennbar. Die Funktionsweise der Ventileinrichtung 36 ist außerdem anhand der Figuren 6 bis 8 skizziert dargestellt.

In den Schnittdarstellungen gemäß Figuren 3 bis 5 ist eine Querbohrung 38 erkennbar, in welcher der Sauganschluss 30 im Ventilgehäuseabschnitt 34 einmündet. Der Hubschlauchanschluss 32 mündet in einen Kanal 40 innerhalb des Ventilgehäuseabschnitts 34.

Der Strömungsweg zwischen Kanal 40 und Querbohrung 38 kann mittels eines Sperrorgans 42 freigegeben oder abgesperrt werden. Im dargestellten Beispiel ist das Sperrorgan 42 als Ventilklappe ausgebildet, die in ihrer offenen Stellung ('Figuren 3, 4 bzw. Figuren 6, 7) die Verbindung von Sauganschluss 30 zu Hubschlauchanschluss 32 freigibt und in ihrer geschlossenen Stellung (Figur 5 bzw. Figur 8) die Verbindung von Hubschlauchanschluss 32 zum Sauganschluss 30 absperrt (z.B. an einem entsprechenden Dichtsitz anliegt, der aus Gründen der Übersichtlichkeit nicht näher dargestellt ist).

Darüber hinaus ist ein Belüftungsventil 44 vorgesehen, mit dem ein Strömungsweg von dem Sauganschluss 30 durch die Querbohrung 38 zur Umgebung freigegeben oder abgesperrt werden kann. Im dargestellten Beispiel weist das Belüftungsventil 44 ebenfalls eine Ventilklappe auf, die den genannten Strömungsweg freigibt oder absperrt. Das Belüftungsventil kann insofern eine Haltestellung einnehmen (gezeigt in Figuren 3, 4 bzw. 6, 7), in welcher der Strömungsweg von dem Sauganschluss 30 zur Umgebung verschlossen ist. Andererseits kann das Belüftungsventil 44 eine Belüftungsstellung einnehmen (gezeigt in Figur 5 bzw. Figur 8), in welcher der Strömungsweg zwischen Sauganschluss 30 und Umgebung freigegeben ist.

Die Ventileinrichtung 36 umfasst außerdem ein Steuerventil 46 mit einem verlagerbaren Ventilkörper 48, der an einem nicht näher dargestellten Dichtsitz anliegen kann oder von diesem entfernt werden kann. Das Steuerventil 46 ist zwischen einer Öffnungsstellung (gezeigt in Figuren 4, 5 bzw. 8) und einer Schließstellung (gezeigt in Figur 3 bzw. 6) einstellbar. In der Schließstellung verschließt der Ventilkörper 48 einen Strömungsweg zwischen dem Hubschlauchanschluss 32 (durch Kanal 40) und der Umgebung. In der Öffnungsstellung ist dieser Strömungsweg weitgehend freigegeben.

Das Steuerventil 46 ist mittels des Steuerelements 28 insbesondere kontinuierlich zwischen Öffnungsstellung und Schließstellung einstellbar. Je weiter das Steuerelement 28 eingedrückt wird (beispielsweise Übergang von der in Figur 3 dargestellten Konfiguration zu der in Figur 4 dargestellten Konfiguration), desto größer ist der von dem Ventilkörper 48 freigegebene Strömungsquerschnitt zwischen Druckschlauchanschluss und Umgebung.

Das Sperrorgan 42 und das Belüftungsventil 44 werden gemeinsam von dem Bedienelement 26 (vgl. Figur 2) betätigt. Wird das Bedienelement 26 ausgehend von seiner Ruhelage betätigt, so wird das Sperrorgan ausgehend von der in den Figuren 3 und 4 gezeigten Stellung derart bewegt, dass es die in Figur 5 gezeigte Stellung einnimmt, d.h. dass der Strömungsweg zwischen Sauganschluss 30 und Hubschlauchanschluss 32 abgesperrt ist. Gleichzeitig wird durch Betätigung des Bedienelements 26 das Belüftungsventil ausgehend von der Haltestellung in die Belüftungsstellung geschaltet (vgl. Übergang von Figur 4 zu Figur 5).

Insofern kann mittels des gemeinsamen Bedienelements 26 eine mechanische Zwangskopplung von Sperrorgan und Belüftungsventil bereitgestellt werden.

Die Bedienvorrichtung 20 umfasst insbesondere einen Sperrmechanismus 50, der sicherstellt, dass das Belüftungsventil 44 nur dann in die Belüftungsstellung verstellbar ist, wenn das Steuerventil 46 bereits in die Öffnungsstellung eingestellt ist.

Der Sperrmechanismus 50 kann einen verschwenkbaren Sperrriegel 52 aufweisen, der derart angeordnet ist, dass er in einer Sperrstellung eine Verstellung des Belüftungsventils 44 blockiert. In der Figur 3 ist der Sperrriegel 52 in seiner Sperrstellung gezeigt. Ausgehend von dieser Sperrstellung ist der Sperrriegel 52 derart verschwenkbar, dass das Belüftungsventil 44 nicht mehr blockiert ist und seine Belüftungsstellung einnehmen kann. Diese Konfiguration des Sperrriegels 52 ist in den Figuren 4 und 5 gezeigt.

Um diese Funktion zu realisieren, kann der Sperrmechanismus 50 ein bewegliches Kopplungsglied 54 aufweisen, welches im dargestellten Beispiel als Verbindungsarm ausgebildet ist, der einerseits mit dem Steuerelement 28 und andererseits mit dem Sperrriegel 52 zusammenwirkt. Bei Betätigung des Steuerelements 28 in seine Endlage (vgl. Figur 4) wird das Kopplungsglied 54 mitgenommen und verschwenkt den Sperrriegel 52 aus seiner Sperrstellung heraus.

Diese Funktionsweise kann beispielsweise dadurch realisiert werden, dass das Kopplungsglied ein Langloch 56 aufweist (vgl. Figur 4), in welcher ein entsprechender Vorsprung oder Zapfen geführt ist, der an dem Steuerelement 28 angeordnet ist. Das Langloch 56 ist derart ausgestaltet und angeordnet, dass der Vorsprung bzw. Zapfen frei läuft und erst bei Vorliegen der Endlage an einem Ende des Langloches anstößt und dadurch das Kopplungsglied 54 bewegt wird. Insofern wird erst dann, wenn das Steuerelement 28 in seine Endlage bewegt ist (vgl. Figur 5) der Sperrriegel 52 aus der Sperrstellung herausbewegt.

Aufgrund der gemeinsamen Betätigung von Sperrorgan 42 und Belüftungsventil 44 mittels des Bedienelements 26 bilden das Sperrorgan 42 und das Belüftungsventil 44 insgesamt ein diskret schaltbares 3/2-Wegeventil 58 (in Figur 5 angedeutet). Dieses hat funktional drei Zugänge, nämlich den Hubschlauchanschluss, den Sauganschluss und eine Strömungsverbindung zur Umgebung. Die Funktionalität eines 3/2-Wegeventils wird durch das gekoppelte Zusammenwirken von Sperrorgan 42, Belüftungsventil 44 bereitgesellt.

Das Steuerventil 46 ist insbesondere nicht mit dem Belüftungsventil 44 gekoppelt und kann grundsätzlich auch in der in Figur 5 gezeigten Situation noch mittels des Steuerelements 28 betätigt werden. Dadurch bleibt der Hubschlauch 12 auch bei Vorliegen der Belüftungsstellung steuerbar.

Bezüglich des Strömungsweges von dem Hubschlauchanschluss 32 durch den Kanal 40 und weiter durch die Querbohrung 38 zu dem Sauganschluss 30 sind das Steuerventil 46, das Sperrorgan 42 und schließlich das Belüftungsventil 44 seriell geschaltet. Dies wird anhand der Funktionsskizzen in den Figuren 6 bis 8 erläutert. Der Strömungsweg verläuft vom Hubschlauch 12 durch den Hubschlauchanschluss 32 hindurch entlang des Steuerventils 46, und weiter entlang des Sperrorgans 42 und entlang des des Belüftungsventils 44 zu dem Sauganschluss 30, und schließlich und weiter in die Sauggreifvorrichtung 16.

In der Figur 6 liegt das Steuerventil 46 in seiner Schließstellung vor (Ventilkörper 48 verschließt die Verbindung zur Umgebung). Das Sperrorgan 42 ist geöffnet, d.h. es gibt den Strömungsweg frei. Das Belüftungsventil 44 hingegen liegt in seiner Haltestellung vor, d.h. der Strömungsweg zur Umgebung ist abgesperrt.

Ausgehend von dieser Konfiguration kann (durch Betätigung des Steuerelements 28, vgl. Figur 3 bis 5) das Steuerventil 46 geöffnet werden. Dadurch gelangt Umgebungsluft in den Hubschlauchanschluss 32. Diese Konfiguration ist in Figur 7 gezeigt.

Ist das Steuerventil 46 vollständig geöffnet (vgl. Figur 8), so kann (durch Betätigung des gemeinsamen Bedienelements 26) das Sperrorgan 42 geschlossen werden. Aufgrund der Kopplung von Sperrorgan 42 und Belüftungsventil 44 wird dabei gleichzeitig das Belüftungsventil 44 in die Belüftungsstellung verstellt. Dies hat zur Folge, dass der Sauganschluss 30 über das Belüftungsventil unmittelbar mit der Umgebung verbunden wird. Dadurch wird die Sauggreifvorrichtung 16 belüftet. Andererseits ist aufgrund des Sperrorgans 42 der Hubschlauchanschluss 32 nicht mehr mit dem Sauganschluss 30 verbunden. Ein Zustrom von Umgebungsluft in den Hubschlauchanschluss 32 kann weiterhin mittels des Steuerventils 46 gesteuert werden.

## Patentansprüche

1. Bedienvorrichtung (20) für einen Schlauchheber (10), der einen Hubschlauch (12) umfasst, welcher einen Schlauchinnenraum (14) aufweist und durch Beaufschlagung des Schlauchinnenraumes (14) mit Unterdruck verkürzbar ist, und mit einer an einem Ende des Hubschlauches (12) angeordneten Sauggreifvorrichtung (16), welche durch den Schlauchinnenraum (14) mit Unterdruck versorgbar ist, wobei die Bedienvorrichtung (20) einen Sauganschluss (30) zur Strömungsverbindung mit der Sauggreifvorrichtung (16), einen Hubschlauchanschluss (32) zur Strömungsverbindung mit dem Schlauchinnenraum (14) des Hubschlauchs (12) sowie eine Ventileinrichtung (36) zur Steuerung der Strömungsverbindungen aufweist,
wobei die Ventileinrichtung (36) umfasst:
- ein Sperrorgan (42), das verschiedene Stellungen einnehmen kann und je nach seiner Stellung einen Strömungsweg zwischen dem Hubschlauchanschluss (32) und dem Sauganschluss (30) absperrt oder freigibt;
- ein Belüftungsventil (44), das in eine Haltestellung und in eine Belüftungsstellung verstellbar ist, wobei in Belüftungsstellung ein Strömungsweg zwischen der Umgebung und dem Sauganschluss (30) freigegeben ist und in Haltestellung dieser Strömungsweg im Wesentlichen verschlossen ist;
- ein Steuerventil (46), das zwischen einer Schließstellung und einer Öffnungsstellung einstellbar ist, wobei in Öffnungsstellung ein Strömungsweg von der Umgebung zu dem Hubschlauchanschluss (32) freigegeben ist und in Schließstellung dieser Strömungsweg im Wesentlichen verschlossen ist;
wobei die Ventileinrichtung (36) derart ausgebildet ist, dass das Steuerventil (46) unabhängig von der Stellung des Sperrorgans (42) einstellbar ist,
**dadurch gekennzeichnet, dass** die Ventileinrichtung (36) derart ausgebildet ist, dass dann, wenn das Belüftungsventil (44) in die Belüftungsstellung verstellt ist, stets das Sperrorgan (42) den Strömungsweg zwischen dem Hubschlauchanschluss (32) und dem Sauganschluss (30) absperrt.

2. Bedienvorrichtung (20) nach Anspruch 1, wobei ein Sicherheitsmechanismus (50) vorgesehen ist, welcher derart mit dem Steuerventil (46) und dem Belüftungsventil (44) zusammenwirkt, dass das Belüftungsventil (44) nur in die Belüftungsstellung verstellbar ist, wenn das Steuerventil (46) in die Öffnungsstellung eingestellt ist.

3. Bedienvorrichtung (20) nach einem der vorherigen Ansprüche, wobei ein gemeinsames Bedienelement (26) für das Sperrorgan (42) und das Belüftungsventil (44) vorgesehen ist, wobei das Bedienelement (26) ausgehend von einer Ruhelage manuell betätigbar ist und bei Betätigung gleichzeitig das Belüftungsventil (44) verstellt wird und das Sperrorgan (42) bewegt wird.

4. Bedienvorrichtung (20) nach Anspruch 3, wobei das Bedienelement (26) mechanisch blockiert ist, wenn das Steuerventil (46) nicht in die Öffnungsstellung eingestellt ist.

5. Bedienvorrichtung (20) nach Anspruch 4, wobei ein zwischen einer Neutrallage und einer Endlage manuell betätigbares Steuerelement (28) vorgesehen ist, wobei bei Betätigung des Steuerelements (28) ausgehend von der Neutrallage in Richtung Endlage das Steuerventil (46) aus der Schließstellung in Richtung Öffnungsstellung verstellt wird, und wobei ein ausgehend von einer Sperrstellung verschwenkbarer oder verlagerbarer Sperrriegel (52) vorgesehen ist, wobei der Sperrriegel (52) in der Sperrstellung das Bedienelement (26) mechanisch blockiert, und wobei ein Kopplungsglied (54) vorgesehen ist, welches derart mit den Steuerelement (28) und dem Sperrriegel (52) zusammenwirkt, dass der Sperrriegel (52) aus seiner Sperrstellung verschwenkt oder verlagert wird, wenn das Steuerelement (28) in die Endlage ist.

6. Bedienvorrichtung (20) nach einem der vorherigen Ansprüche, wobei das Sperrorgan (42) und das Belüftungsventil (44) derart mechanisch miteinander gekoppelt sind, dass durch eine Einstellung des Belüftungsventils (44) in die Belüftungsstellung das Sperrorgan (42) derart verstellt wird, dass der Strömungsweg zwischen Hubschlauchanschluss (32) und Sauganschluss (30) abgesperrt ist.

7. Bedienvorrichtung (20) nach einem der vorherigen Ansprüche, wobei das Belüftungsventil (44) von einem diskret schaltbaren Ventil bereitgestellt ist.

8. Bedienvorrichtung (20) nach einem der vorherigen Ansprüche, wobei das Sperrorgan (42) diskret in seine zwei Stellungen schaltbar ist.

9. Bedienvorrichtung (20) nach einem der vorherigen Ansprüche, wobei die Ventileinrichtung (36) ein 3/2-Wegeventil (58) aufweist, welches sowohl das Sperrorgan (42), als auch das Belüftungsventil (44) bereitstellt.

10. Bedienvorrichtung (20) nach einem der vorherigen Ansprüche, wobei die Ventileinrichtung (36) derart ausgebildet ist, dass das Steuerventil (46) auch dann in die Öffnungsstellung verstellbar ist, wenn das Sperrorgan (42) den Strömungsweg zwischen dem Hubschlauchanschluss (32) und dem Sauganschluss (30) absperrt.

11. Bedienvorrichtung (20) nach einem der vorherigen Ansprüche, wobei das Steuerventil (46), das Sperrorgan (42) und das Belüftungsventil (44) zwischen dem Hubschlauchanschluss (32) und dem Sauganschluss (30) in Serie geschaltet sind.

12. Bedienvorrichtung (20) nach einem der vorherigen Ansprüche, aufweisend einen von einer Bedienperson greifbaren Handgriff (24), wobei an dem Handgriff (24) ein gemeinsames Bedienelement (26) für das Sperrorgan (42) und das Belüftungsventil (44) vorgesehen ist, und wobei an dem Handgriff (24) zusätzlich ein betätigbares Steuerelement (28) zur Einstellung des Steuerventils (46) vorgesehen ist.

13. Schlauchheber (10) umfassend einen Hubschlauch (12) mit einem Schlauchinnenraum (14), wobei der Hubschlauch (12) durch Beaufschlagung des Schlauchinnenraumes (14) mit Unterdruck verkürzbar ist, und aufweisend eine mit einem Ende des Hubschlauches (12) verbundene Sauggreifvorrichtung (16), welche durch den Schlauchinnenraum (14) mit Unterdruck versorgbar ist, **gekennzeichnet durch** eine Bedienvorrichtung (20) gemäß einem der vorherigen Ansprüche zur Bedienung des Hubschlauches (12).

## Claims

1. Operating device (20) for a tube lifter (10) which comprises a lifting tube (12) that has a tube interior (14) and can be shortened by applying a vacuum to the tube interior (14), and comprising a suction grip device (16) arranged on one end of the tube lifter (12), which suction grip device can be supplied with a vacuum through the tube interior (14),
the operating device (20) having a suction port (30) for fluid communication with the suction grip device (16), a lifting tube port (32) for fluid communication with the tube interior (14) of the lifting tube (12), and a valve means (36) for controlling the fluid communications, the valve means (36) comprising:
- a blocking member (42), which can assume various positions and, depending on its position, closes off or opens a flow path between the lifting tube port (32) and the suction port (30);
- a ventilation valve (44), which can be shifted into a hold position and into a ventilation position, in the ventilation position a flow path between the surroundings and the suction port (30) being open, and in the hold position said flow path being substantially closed;
- a control valve (46), which is adjustable between a closed position and an open position, in the open position a flow path from the surroundings to the lifting tube port (32) being open, and in the closed position said flow path being substantially closed;
the valve means (36) being designed such that the control valve (46) is adjustable independently of the position of the blocking member (42),
**characterized in that** the valve means (36) is designed such that when the ventilation valve (44) is shifted into the ventilation position the blocking member (42) always closes off the flow path between the lifting tube port (32) and the suction port (30).

2. Operating device (20) according to claim 1, wherein a safety mechanism (50) is provided which interacts with the control valve (46) and the ventilation valve (44) such that the ventilation valve (44) can only be shifted into the ventilation position when the control valve (46) is adjusted into the open position.

3. Operating device (20) according to any of the preceding claims, wherein a common operating element (26) for the blocking member (42) and the ventilation valve (44) is provided, wherein the operating element (26) is manually actuable starting from a rest position and, upon actuation, the ventilation valve (44) is shifted and the blocking member (42) is moved simultaneously.

4. Operating device (20) according to claim 3, wherein the operating element (26) is mechanically blocked when the control valve (46) is not adjusted into the open position.

5. Operating device (20) according to claim 4, wherein a control element (28) that is manually actuable between a neutral position and an end position is provided, wherein, when the control element (28) is actuated starting from the neutral position toward the end position, the control valve (46) is shifted from the closed position toward the open position, and wherein a safety catch (52) that is pivotable or movable starting from a blocking position is provided, wherein the safety catch (52) in the blocking position mechanically blocks the operating element (26), and wherein a coupling element (54) is provided, which interacts with the control element (28) and the safety catch (52) in such a way that the safety catch (52) is pivoted or moved out of its blocking position when the control element (28) is adjusted into the end position.

6. Operating device (20) according to any of the preceding claims, wherein the blocking member (42) and the ventilation valve (44) are mechanically intercoupled such that, by means of an adjustment of the ventilation valve (44) into the ventilation position, the blocking member (42) is shifted such that the flow path between the lifting tube port (32) and the suction port (30) is closed off.

7. Operating device (20) according to any of the preceding claims, wherein the ventilation valve (44) is provided by a discretely switchable valve.

8. Operating device (20) according to any of the preceding claims, wherein the blocking member (42) can be discretely switched into its two positions.

9. Operating device (20) according to any of the preceding claims, wherein the valve means (36) has a 3/2-way valve (58), which provides both the blocking member (42) and the ventilation valve (44).

10. Operating device (20) according to any of the preceding claims, wherein the valve means (36) is designed such that the control valve (46) can also be shifted into the open position when the blocking member (42) closes off the flow path between the lifting tube port (32) and the suction port (30).

11. Operating device (20) according to any of the preceding claims, wherein the control valve (46), the blocking member (42) and the ventilation valve (44) are connected in series between the lifting tube port (32) and the suction port (30).

12. Operating device (20) according to any of the preceding claims, having a handle (24) that can be grasped by an operator, wherein a common operating element (26) for the blocking member (42) and the ventilation valve (44) is provided on the handle (24), and wherein an actuable control element (28) for adjusting the control valve (46) is additionally provided on the handle (24).

13. Tube lifter (10) comprising a lifting tube (12) that comprises a tube interior (14), it being possible to shorten the lifting tube (12) by applying a vacuum to the tube interior (14), and having a suction grip device (16) connected to one end of the lifting tube (12), which suction grip device can be supplied with a vacuum through the tube interior (14), **characterized by** an operating device (20) according to any of the preceding claims for operating the lifting tube (12).

## Revendications

1. Dispositif de manœuvre (20) pour un dispositif de levage à tuyau flexible (10) qui comprend un tuyau flexible de levage (12) qui présente un volume intérieur de tuyau flexible (14) et peut être raccourci par mise sous dépression dudit volume intérieur de tuyau flexible (14), et avec un dispositif de préhension par aspiration (16) qui est disposé à une extrémité du tuyau flexible de levage (12) et peut être alimenté en dépression à travers le volume intérieur de tuyau flexible (14),
dans lequel ledit dispositif de manœuvre (20) comprend un raccord d'aspiration (30) pour la communication fluidique avec le dispositif de préhension par aspiration (16), un raccord de tuyau flexible de levage (32) pour la communication fluidique avec le volume intérieur de tuyau flexible (14) du tuyau flexible de levage (12) ainsi qu'un dispositif de soupape (36) destiné à commander les liaisons d'écoulement,
dans lequel le dispositif de soupape (36) comprend:
- un organe de blocage (42) qui peut occuper différentes positions et qui, selon sa position, bloque ou libère un chemin d'écoulement entre le raccord de tuyau flexible de levage (32) et le raccord d'aspiration (30) ;
- une soupape de ventilation (44) qui peut être amenée dans une position de maintien et dans une position de ventilation, dans lequel, dans la position de ventilation, un chemin d'écoulement entre l'environnement et le raccord d'aspiration (30) est libéré, et, dans la position de maintien, ce chemin d'écoulement est pour l'essentiel fermé;
- une soupape de commande (46) qui est réglable entre une position fermée et une position ouverte, dans lequel, dans la position ouverte, un chemin d'écoulement depuis l'environnement vers le raccord de tuyau flexible de levage (32) est libéré et, dans la position fermée, ce chemin d'écoulement est pour l'essentiel fermé;
dans lequel le dispositif de soupape (36) est conçu de telle manière que la soupape de commande (46) peut être réglée indépendamment de la position de l'organe de blocage (42),
**caractérisé par le fait que** le dispositif de soupape (36) est conçu de telle manière que lorsque la soupape de ventilation (44) est réglée en position de ventilation, l'organe de blocage (42) bloque toujours le chemin d'écoulement entre le raccord de tuyau flexible de levage (32) et le raccord d'aspiration (30).

2. Dispositif de manœuvre (20) selon la revendication 1, dans lequel un mécanisme de sécurité (50) est prévu qui agit de concert avec la soupape de commande (46) et la soupape de ventilation (44) de telle sorte que la soupape de ventilation (44) ne peut être réglée en position de ventilation que lorsque la soupape de commande (46) est réglée en position ouverte.

3. Dispositif de manœuvre (20) selon l'une quelconque des revendications précédentes, dans lequel un élément de manœuvre (26) commun pour l'organe de blocage (42) et la soupape de ventilation (44) est prévu, dans lequel ledit élément de manœuvre (26) peut être actionné manuellement à partir d'une position de repos et, lors de l'actionnement, il y a à la fois un réglage de la soupape de ventilation (44) et un déplacement de l'organe de blocage (42).

4. Dispositif de manœuvre (20) selon la revendication 3, dans lequel l'élément de manœuvre (26) est bloqué mécaniquement lorsque la soupape de commande (46) n'est pas réglée en position ouverte.

5. Dispositif de manœuvre (20) selon la revendication 4, dans lequel un élément de commande (28) apte à être actionné manuellement entre une position neutre et une position finale est prévu, dans lequel, lorsque ledit élément de commande (28) est actionné à partir de la position neutre en direction de la position finale, la soupape de commande (46) est ajustée de manière à passer de la position fermée en direction de la position ouverte, et dans lequel un verrou de blocage (52) qui peut être pivoté ou déplacé à partir d'une position de blocage est prévu, dans lequel ledit verrou de blocage (52) bloque mécaniquement l'élément de manœuvre (26) dans la position de blocage, et dans lequel un élément de couplage (54) est prévu qui agit de concert avec l'élément de commande (28) et le verrou de blocage (52) de telle sorte que le verrou de blocage (52) est pivoté ou déplacé hors de sa position de blocage lorsque l'élément de commande (28) est en position finale.

6. Dispositif de manœuvre (20) selon l'une quelconque des revendications précédentes, dans lequel l'organe de blocage (42) et la soupape de ventilation (44) sont couplés mécaniquement l'un à l'autre de telle manière que, en réglant la soupape de ventilation (44) dans la position de ventilation, l'organe de blocage (42) est réglé de telle sorte que le chemin d'écoulement entre le raccord de tuyau flexible de levage (32) et le raccord d'aspiration (30) est bloqué.

7. Dispositif de manœuvre (20) selon l'une quelconque des revendications précédentes, dans lequel la soupape de ventilation (44) est fournie par une soupape apte à être commutée de manière discrète.

8. Dispositif de manœuvre (20) selon l'une quelconque des revendications précédentes, dans lequel l'organe de blocage (42) peut être commuté de manière discrète dans ses deux positions.

9. Dispositif de manœuvre (20) selon l'une quelconque des revendications précédentes, dans lequel le dispositif de soupape (36) comprend une soupape à 3/2 voies (58) qui fournit aussi bien l'organe de blocage (42) que la soupape de ventilation (44).

10. Dispositif de manœuvre (20) selon l'une quelconque des revendications précédentes, dans lequel le dispositif de soupape (36) est conçu de telle sorte que la soupape de commande (46) peut également être réglée en position ouverte lorsque l'organe de blocage (42) bloque le chemin d'écoulement entre le raccord de tuyau flexible de levage (32) et le raccord d'aspiration (30).

11. Dispositif de manœuvre (20) selon l'une quelconque des revendications précédentes, dans lequel la soupape de commande (46), l'organe de blocage (42) et la soupape de ventilation (44) sont montés en série entre le raccord de tuyau flexible de levage (32) et le raccord d'aspiration (30) .

12. Dispositif de manœuvre (20) selon l'une quelconque des revendications précédentes, comprenant une poignée (24) qui peut être saisie par un opérateur, dans lequel un élément de manœuvre (26) commun pour l'organe de blocage (42) et la soupape de ventilation (44) est prévu sur ladite poignée (24), et sur ladite poignée (24) étant prévu en sus un élément de commande (28) actionnable destiné à régler la soupape de commande (46).

13. Dispositif de levage à tuyau flexible (10) comprenant un tuyau flexible de levage (12) qui présente un volume intérieur de tuyau flexible (14), dans lequel ledit tuyau flexible de levage (12) peut être raccourci par mise sous dépression dudit volume intérieur de tuyau flexible (14), et comprenant un dispositif de préhension par aspiration (16) qui est relié à une extrémité du tuyau flexible de levage (12) et peut être alimenté en dépression à travers le volume intérieur de tuyau flexible (14), **caractérisé par** un dispositif de manœuvre (20) selon l'une quelconque des revendications précédentes, destiné à manoeuvrer le tuyau flexible de levage (12).
